# EUROPÄISCHE PATENTANMELDUNG

(11) **EP 0 693 454 A1**
(43) Veröffentlichungstag der Anmeldung: **24.01.1996**
(21) Anmeldenummer: 95109898.7
(22) Anmeldetag: 24.06.1995
(51) Int. Cl.: B66C 23/80, B60S 9/10

(54) **Hydraulisch aus- und einfahrbare Stütze für ein mit einem Ladekran versehenes Lastfahrzeug**

(30) Priorität: 01.07.1994 AT 156/94 U
(71) Anmelder: Palfinger Aktiengesellschaft, A-5010 Bergheim/Salzburg (AT)
(72) Erfinder: Wimmer, Eckhard, A-5400 Hallein (AT)
(74) Vertreter: Torggler, Paul, Dr.

(57) **Zusammenfassung**

Hydraulisch aus- und einfahrbare Stütze für ein mit einem Ladekran versehenes Lastfahrzeug, mit einem feststehenden Außenrohr (1) und einem darin verschiebbaren, einen Kolben (3) tragenden Innenrohr (2), wobei der Raum (11) zwischen Außenrohr (1) und Innenrohr (2) mit einer Zu- und Ableitung (8) für die Hydraulikflüssigkeit über eine Öffnung (4) im Innenrohr (2) und ein feststehendes, den Kolben (3) durchdringendes Versorgungsrohr (5) in Verbindung steht.

## Beschreibung

Die Erfindung bezieht sich auf eine hydraulisch aus- und einfahrbare Stütze für ein mit einem Ladekran versehenes Lastfahrzeug, mit einem feststehenden Außenrohr und einem darin verschiebbaren, einen Kolben tragenden Innenrohr.

Bei einer bekannten derartigen Einrichtung erfolgt die Zufuhr der Hydraulikflüssigkeit einerseits am oberen Ende, andererseits (zum Einfahren der Stütze) am unteren Ende des Außenrohres. Die zum unteren Ende des Außenrohres führende Leitung verläuft an der Außenseite desselben und stellt einen störenden Vorsprung gegenüber dessen zylindrischer Oberfläche dar.

Die Erfindung vermeidet diesen Nachteil dadurch, daß der Raum zwischen Außenrohr und Innenrohr mit einer Zu- und Ableitung für die Hydraulikflüssigkeit über eine Öffnung im Innenrohr und ein feststehendes, den Kolben durchdringendes Versorgungsrohr in Verbindung steht.

Das Versorgungsrohr, welches erfindungsgemäß durch den Kolben ins Innenrohr geführt ist, leitet die Hydraulikflüssigkeit so weit nach unten, wie dies die bisher an der Außenseite des Außenrohres vorgesehene Leitung getan hat. Entscheidend dabei ist, daß die Mündung des Versorgungsrohres immer unterhalb des Kolbens angeordnet sein muß, da der Zweck der Leitung die Rückführung der Stütze in den Ausgangszustand, also die Beaufschlagung der Kolbenunterseite ist.

Während bei bekannten Einrichtungen die außen geführte Versorgungsleitung direkt in den Raum zwischen Außenrohr und Innenrohr mündet, muß gemäß der Erfindung die Hydraulikflüssigkeit noch aus dem Inneren des Innenrohres in den Zwischenraum von Außenrohr und Innenrohr gelangen, wozu die erwähnte Öffnung im Innenrohr dient.

Um sicherzustellen, daß die ausgefahrene Stütze nicht unbeabsichtigt in die unwirksame Stellung zurückkehrt, wird vorzugsweise vorgesehen, daß dem Versorgungsrohr ein hydraulisch gesteuertes Rückschlagventil vorgeschaltet ist, welches sich öffnet, wenn der Oberseite des Kolbens über eine Leitung unter Druck stehende Hydraulikflüssigkeit zugeführt wird.

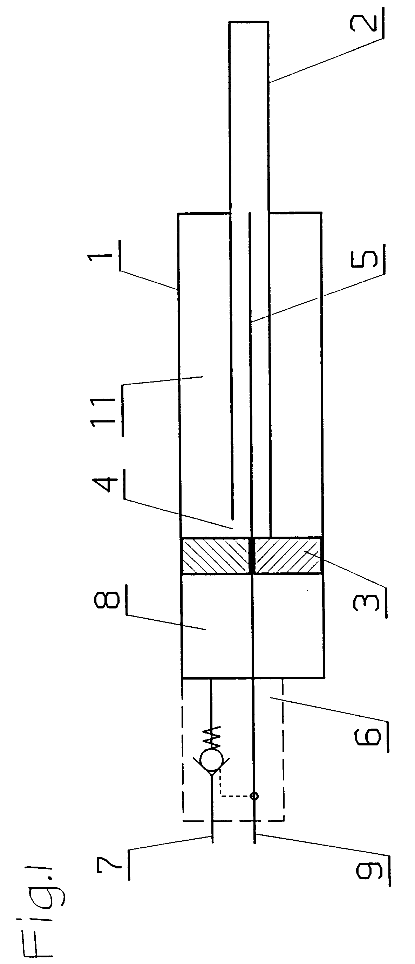

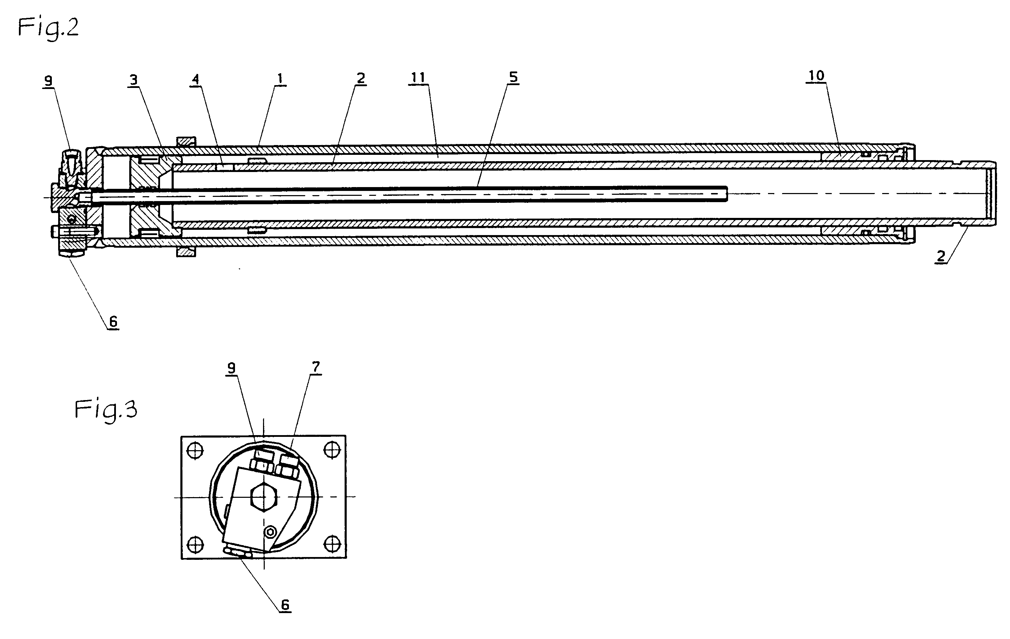

Weitere Einzelheiten der Erfindung werden anschließend anhand der Zeichnung erläutert. In dieser ist
Fig. 1 ein Schaltplan, Fig. 2 und 3 ein Ausführungsbeispiel für die konstruktive Ausgestaltung der Stütze, wobei Fig. 2 einen Längsschnitt, Fig. 3 eine Draufsicht darstellt.

Wesentliche Teile der erfindungsgemäßen Stütze sind ein feststehendes Außenrohr 1 und darin verschiebbar gelagertes Innenrohr 2, welches mit einem Kolben 3 fest verbunden ist. Das Ausfahren der Stütze wird bewirkt, indem über die Leitung 7 unter Druck Hydraulikflüssigkeit in den Raum 8 eingeführt wird. Da sich mit Vergrößerung des Raumes 8 der Zwischenraum 11 zwischen Innenrohr 2 und Außenrohr 1 verkleinert, muß aus diesem Zwischenraum 11 gleichzeitig Hydraulikflüssigkeit abströmen. Dies geschieht über die Öffnung 4 im Innenrohr 2 und das Versorgungsrohr 5 bzw. die Leitung 9.

Das Einziehen des Innenrohres 2 in das Außenrohr 1, also eine Verkleinerung des Raumes 8, ist nur möglich, wenn die Leitung 9 unter Druck steht. Nur dann ist nämlich das druckgesteuerte Rückschlagventil 6 geöffnet und ein Abfließen der Hydraulikflüssigkeit aus dem Raum 8 über die Leitung 7 möglich. Gleichzeitig wird natürlich der Zwischenraum 11 über die durch die Leitung 9, die Versorgungsleitung 5 und die Öffnung 4 zuströmende Hydraulikflüssigkeit vergrößert.

Die konstruktive Ausgestaltung der beschriebenen Elemente ergibt sich aus Fig. 2 und 3. Auf die Bedeutung der einzelnen Bezugszeichen muß hiebei nicht näher eingegangen werden, da mit Ausnahme der Dichtringhalterung 10 zwischen Außenrohr 1 und Innenrohr 2 bereits alle Konstruktionselemente anhand von Fig. 1 diskutiert worden sind.

## Patentansprüche

1. Hydraulisch aus- und einfahrbare Stütze für ein mit einem Ladekran versehenes Lastfahrzeug, mit einem feststehenden Außenrohr und einem darin verschiebbaren, einen Kolben tragenden Innenrohr, dadurch gekennzeichnet, daß der Raum (11) zwischen Außenrohr (1) und Innenrohr (2) mit einer Zu- und Ableitung (8) für die Hydraulikflüssigkeit über eine Öffnung (4) im Innenrohr (2) und ein feststehendes, den Kolben (3) durchdringendes Versorgungsrohr (5) in Verbindung steht.

2. Stütze nach Anspruch 1, dadurch gekennzeichnet, daß dem Versorgungsrohr (5) ein hydraulisch gesteuertes Rückschlagventil (6) vorgeschaltet ist, welches sich öffnet, wenn der Oberseite des Kolbens (3) über eine Leitung (9) unter Druck stehende Hydraulikflüssigkeit zugeführt wird.
